# EUROPÄISCHE PATENTSCHRIFT

(11) **EP 3 689 207 B1**
(45) Veröffentlichungstag und Bekanntmachung des Hinweises auf die Patenterteilung: **22.03.2023**
(21) Anmeldenummer: 20152106.9
(22) Anmeldetag: 16.01.2020
(51) Int. Cl.: A47J 45/07

(54) **BEFESTIGUNGSVORRICHTUNG FÜR EINEN HANDGRIFF**
FASTENING DEVICE FOR A HANDLE
DISPOSITIF DE FIXATION POUR UNE POIGNÉE

(30) Priorität: 01.02.2019 DE 102019102574
(43) Veröffentlichungstag der Anmeldung: 05.08.2020
(73) Patentinhaber: Baumgarten Handle Systems KG, 57290 Neunkirchen (DE)
(72) Erfinder: BESCHE, Michael, 57518 Betzdorf (DE); KLAUS, Stefan, 57234 Wilnsdorf (DE)
(74) Vertreter: advotec.

(56) Entgegenhaltungen:
- EP-A1- 0 209 461
- DE-A1- 19 940 970
- DE-B4- 19 940 970
- US-A- 3 065 018

## Beschreibung

Die Erfindung betrifft eine Vorrichtung zur Befestigung eines Handgriffs an einem Koch- oder Bratgefäß nach dem Oberbegriff des Anspruchs 1.

Derartige Ausbildungen sind im Stand der Technik vielfach bekannt. Gattungsgemäße Vorrichtungen weisen ein an einem Koch- oder Bratgefäß angeordnetes Tragteil auf, welches beispielsweise durch Schweißen oder Anschrauben, am Kochgefäß befestigt ist. Dadurch, dass der Handgriff eine korrespondierend zum Tragteil geformte Ausnehmung aufweist kann der Handgriff auf das Tragteil aufgeschoben werden und dort verrastet oder verriegelt werden. In diesem Zusammenhang ist es bekannt, dass am Handgriff ein Betätigungselement vorgesehen sein kann, um eine Rastverbindung herzustellen und/oder zu lösen. Jedoch ist bei gattungsgemäßen Vorrichtungen eine äußerst genaue Fertigung erforderlich, um einen wackelfreien Sitz der Teile in Gebrauchslage zu gewährleisten. Aufgrund des passgenauen Sitzes kann aber die Bedienung, insbesondere das Aufstecken und das Lösen des Handgriffs, gattungsgemäßer Vorrichtungen erschwert werden.

Die EP 0 209 461 A1 offenbart ein Bratgefäß mit abnehmbarem Griff, welcher im Wesentlichen aus zwei Teilen besteht. Der erste Teil des bekannten Griffs umfasst ein nach außen offenes Gehäuse und wird an einer am Bratgefäß angeordneten Halterung angebracht. Der zweite Teil des Griffes ist schwenkbar um eine Achse an dem ersten Teil des Griffs angelenkt, wobei die Schwenkbewegung des zweiten Griffteils um die Achse mittels eines federgelagerten Elements zur Fixierung des Griffs blockiert werden kann. Zur Fixierung des Griffs am Bratgefäß in Gebrauchslage wird ein gebogener Verriegelungsstift in die Halterung eingeführt, wobei der Verriegelungsstift mit dem Griff verschraubt ist und an der Halterung zur Anlage kommt.

Aus der DE 199 40 970 B4 ist eine gattungsgemäße Vorrichtung zur Befestigung eines Handgriffs an einem Koch- oder Bratgefäß bekannt. Diese bekannte Vorrichtung umfasst einen Handgriff, der auf ein am Kochgefäß angeordnetes Tragteil aufsteckbar ist. Um eine Einhandbedienung der Vorrichtung und einen wackelfreien Sitz des Griffs auf dem Tragteil zu gewährleisten, ist vorgeschlagen, dass der Handgriff eine Ausnehmung aufweist, dessen geometrische Gestaltung im Wesentlichen dem Querschnitt des Tragteils entspricht, so dass in Gebrauchslage die Schenkel des Tragteils mit der Ausnehmung des Handgriffs zusammenwirken. Aufgrund einer Schrägstellung der Kontaktflächen des Tragteils und/oder der Ausnehmung in Zusammenspiel mit einem in den Handgriff integrierten Federelement kann auch bei größeren Fertigungstoleranzen der Bauteile ein wackelfreier Sitz gewährleistet werden. Zudem ist beschrieben, dass durch das Überführen des Federelements der gattungsgemäßen Vorrichtung in die Entriegelungsposition der Handgriff relativ leicht von dem am Kochgefäß befestigten Tragteil abgenommen werden kann.

Die genannte Druckschrift beschreibt als Aufgabenstellung, dass die Vorrichtung in verbessertem Maße mit einer Hand zu bedienen sein soll, wobei dennoch ein sicherer und wackelfreier Sitz des Handgriffs auf dem Tragteil gewährleistet sein soll. Dies wird aber durch die beschriebene Lösung nicht oder nur unzureichend erreicht.

Die gattungsgemäße Vorrichtung ermöglicht zwar einen sicheren und wackelfreien Sitz des Handgriffs auf dem Tragteil, jedoch lockert sich dieser aufgrund der Belastungen während des Gebrauchs,. Somit kann ein wackelfreier Sitz des Griffs auf dem Tragteil bei wechselnder Belastung nicht ausreichend gewährleistet werden.

Ausgehend von diesem Stand der Technik ist es Aufgabe der vorliegenden Erfindung, eine neue Vorrichtung zur Befestigung eines Handgriffs an einem Koch- oder Bratgefäß vorzuschlagen, bei der eine ergonomische und einfache Bedienung der Vorrichtung mit einer Hand möglich ist, wobei dennoch eine sichere, langlebige und wackelfreie Verbindung zwischen Handgriff und Tragteil unter dynamischer und/oder zyklischer Belastung gewährleistet ist.

Diese Aufgabe wird durch die Lehre des unabhängigen Hauptanspruchs gelöst.

Vorteilhafte Ausführungsformen der Erfindung sind Gegenstand der Unteransprüche.

Die erfindungsgemäße Vorrichtung zur Befestigung eines Handgriffs an einem Koch- oder Bratgefäß beruht auf dem Grundgedanken, dass das Tragteil in seiner Basis eine fensterartige Ausnehmung aufweist und in der Ausnehmung des Handgriffs an der in Gebrauchslage parallel zur Basis gerichteten Fläche ein Gabelelement befestigt ist. Um eine sichere, langlebige und dauerhafte Verbindung ohne Spiel zwischen Tragteil und Handgriff herstellen zu können, ist erfindungsgemäß vorgesehen, dass das Gabelelement aus einem federelastischen Material hergestellt ist. Ein solches federelastisches Gabelelement stützt sich in Gebrauchslage an den Auflageflächen ab und verspannt das System aufgrund der federelastischen Eigenschaften des Gabelelements derart, dass ein Wackeln des Handgriffs ausgeschlossen werden kann. Zudem kann mit einem federelastischen Gabelelement das Einführen des gebogenen Endes des Gabelelements in die fensterartige Ausnehmung erleichtert und die Haptik, insbesondere bei wechselnden Belastungen, beispielsweise beim Leeren oder Füllen des Koch- oder Bratgefäßes, verbessert werden, wodurch eine Erhöhung des Bedienkomforts erreicht wird.

Zur einfachen und ergonomischen Einführung des Gabelelements in die fensterartige Ausnehmung weist das Gabelelement zumindest einen gebogenen Abschnitt und einen geraden Abschnitt auf, wobei das Gabelelement mit seinem gebogenen Ende in die fensterartige Ausnehmung eingreift. Nachdem das Gabelelement aufgrund seiner Geometrie beim Einführen in die fensterartige Ausnehmung geführt wird, kann der Handgriff in einfacher Art und Weise auf das am Koch- oder Bratgefäß angeordnete Tragteil aufgesteckt werden. Durch die erfindungsgemäße Ausgestaltung des Gabelelements ist sichergestellt, dass das Gabelelement beim Einführen in die fensterartige Ausnehmung nicht verkantet. Zudem ist es als erfindungswesentlich erkannt worden, dass das Gabelelement klemmend in der Ausnehmung des Handgriffs befestigt ist und nicht, wie aus dem Stand der Technik bekannt, mit einer Schraubverbindung. Dadurch lässt sich ein wackelfreier Zentriersitz bei wechselnden Belastungen und dauerhafter Nutzung erreichen, da keine Schraubverbindung, die sich lösen könnte, zur Befestigung des Gabelelements notwendig ist. Zudem kann durch das Entfallen der Schraubverbindung am Gabelelement die Montage des Gabelelements besonders einfach und flexibel erfolgen.

Um ein möglichst einfaches Einführen des Gabelelements in die fensterartige Ausnehmung des Handgriffs zu ermöglichen, ist das Gabelelement am gebogenen Abschnitt im Wesentlichen S-förmig gebogen. Durch diese S-förmige Biegung des Gabelelements am gebogenen Abschnitt, ist an diesem gebogenen Abschnitt ein Anlageballen ausgebildet, der eine sichere und dauerhafte Abstützung bei gleichzeitig möglichst geringer Anlagefläche gewährleistet.

Um einen möglichst sicheren und wackelfreien Sitz gewährleisten zu können, ist das Gabelelement in der Gebrauchslage einerseits mit dem geraden Abschnitt und andererseits mit dem Anlageballen am Tragteil abgestützt. Dadurch können die beim Gebrauch an der Vorrichtung angreifenden Kräfte, beispielsweise durch ein vollgefülltes Koch- oder Bratgefäß, gleichmäßig innerhalb der Vorrichtung über das Gabelelement verteilt werden, so dass auch bei hohen Belastungen ein wackelfreier Sitz sichergestellt werden kann.

Die Bauart des Tragteils ist grundsätzlich beliebig. Im Hinblick auf einen weitgehend spielfreien Sitz des Tragteils ist es vorteilhaft, wenn das Tragteil einen im Wesentlichen U-förmigen Querschnitt mit in Gebrauchslage etwa vertikal abkragenden Schenkeln und die Ausnehmung des Handgriffs eine entsprechende Querschnittsform aufweist. Mindestens ein Schenkel des Tragteils und/oder mindestens eine mit einem Schenkel des Tragteils in der Gebrauchslage der Teile zusammenwirkende Fläche der Ausnehmung des Handgriffs ist dabei derart schräg gestellt, dass der Schenkel oder die Schenkel des Tragteils mit dessen Basis einen stumpfen Winkel einschließt oder einschließen. Alternativ dazu kann die mit dem Schenkel korrespondierende Wandung der Ausnehmung mit der Basis des Tragteils in Gebrauchslage einen stumpfen Winkel einschließen.

Es hat sich als vorteilhaft erwiesen, dass der Anlageballen des Gabelelements mit einer im Wesentlichen linearen Anlagefläche am Tragteil zur Anlage kommt. Durch die lineare Anlagefläche und den damit einhergehenden geringen Raumbedarf des Anlageballens wird ein besonders einfaches Einführen und Verrasten des Handgriffs am Koch- oder Bratgefäß ermöglicht und es erfolgt eine definierte Krafteinleitung in das Gabelelement, so dass das Gabelelement in Abhängigkeit der Größe und des Gewichts des Koch- oder Bratgefäßes anforderungsgemäß ausgelegt werden kann.

Um die auftretenden Kräfte definiert und in einfacher Weise in das Gabelelement einleiten zu können, ist es gemäß einer bevorzugten Ausführungsform vorgesehen, dass die lineare Anlagefläche des Anlageballens quer zur Längserstreckung des Gabelelements gerichtet ist.

Zur Fixierung des Gabelelements und Stabilisierung der Vorrichtung in der Gebrauchslage ist es besonders vorteilhaft, wenn der gerade Abschnitt des Gabelelements in der Gebrauchslage auf einer von der Basis des Tragteils gebildeten Auflagefläche aufliegt. Im Rahmen der Erfindung betrifft die Basis den in Gebrauchslage die Oberseite des Tragteils ausbildenden Abschnitt des Tragteils. Beispielsweise wird die Basis, wenn das Tragteil im Querschnitt trapezförmig ist, in der Quererstreckung durch die obere Grundseite des Trapezes definiert. Die Auflagefläche für den geraden Abschnitt des Gabelelements erstreckt sich in Gebrauchslage erfindungsgemäß von der fensterartigen Ausnehmung parallel zur Oberseite der Basis in Richtung des Betätigungselements. Durch diese Ausführung ist sichergestellt, dass das gerade Ende des Gabelelements an der Anlagefläche zur Auflage kommt, sobald das Gabelelement mit seinem gebogenen Ende in die fensterartige Ausnehmung eingreift und die Anlagefläche des gebogenen Endes des Gabelelements am Tragteil zur Anlage kommt. Vorteilhafterweise gewährleistet diese Ausführungsform einen dauerhaft wackelfreien Sitz des Handgriffs am Koch- oder Bratgefäß.

Um eine besonders stabile Verbindung von Tragteil und Handgriff in Gebrauchslage zu erreichen, ist es gemäß einer bevorzugten Ausführungsform vorgesehen, dass die Schenkel des Tragteils in Gebrauchslage im Wesentlichen ballig an den dazu parallelen Flächen der Ausnehmung des Handgriffs anliegen.

Wie das Betätigungselement mit dem Rastelement verbunden ist, ist grundsätzlich beliebig. Es hat sich jedoch als vorteilhaft erwiesen, wenn das Betätigungselement auf das Rastelement aufgesteckt werden kann. Durch diese zweistückige Ausführung von Betätigungselement und Rastelement ist es, im Gegensatz zu einer nicht lösbaren Verbindung oder einer einstückigen Ausführung von Rastelement und Betätigungselement, möglich, das Betätigungselement in einfacher Art und Weise und ohne Aufwand auszutauschen. Ist das Betätigungselement, beispielsweise durch Hitzeeinwirkung, beschädigt worden, stellt dies vielfach ein Problem dar, da ein Austausch nur durch Zerlegung des Handgriffs in dessen Einzelteile und/oder Baugruppen möglich ist. Mit der erfindungsgemäßen Lösung kann in einfacher Art und Weise lediglich das Betätigungselement demontiert werden und gegen ein unbeschädigtes Betätigungselement ausgetauscht werden.

Um eine Positionierung des Rastelements in Gebrauchslage und in Demontagelage in einfacher Weise realisieren zu können, ist gemäß einer bevorzugten Ausführungsform ein Federelement vorgesehen, gegen dessen Federkraft das Betätigungselement am Handgriff parallel zur Grifflängserstreckung verschiebbar gehaltert ist. Vorteilhafterweise wird das Rastelement bei Verschiebung des Betätigungselements so positioniert, dass eine am Rastelement angeordnete Haltenase in Gebrauchslage die Stirnrandkante der Basis des Tragteils untergreift und in Demontagelage die Stirnrandkante der Basis des Tragteils frei gibt. Dadurch wird es in einfacher Art und Weise ermöglicht, dass die Haltenase in Gebrauchslage die Verbindung von Tragteil und Handgriff sichert und in Demontagelage die Stirnrandkante der Basis frei gibt, so dass der Handgriff vom Tragteil abgenommen werden kann.

Um eine leichtgängige Verschiebung des Betätigungselements und des Rastelements und einen geringen Raumbedarf des Rastelements bei gelichzeitig ausreichender Stabilisierung der Verbindung von Handgriff und Tragteil in Gebrauchslage zu realisieren, hat es sich als vorteilhaft erwiesen, wenn die Haltenase des Rastelements an der Stirnfläche abgeschrägt ist.

Weiterhin hat es sich als vorteilhaft erwiesen, wenn als Federelement eine Schraubenfeder in der Ausnehmung des Handgriffs angeordnet ist. Eine Schraubenfeder kann besonders platzsparend im Handgriff angeordnet werden, indem sie so angeordnet wird, dass sich die Schraubenfeder einerseits an der der Stirnfläche abgewandten Rückseite des Rastelements und andererseits an einer dazu parallelen Fläche am Ende der Ausnehmung des Handgriffs abstützt.

Aus welchem Material das Tragteil besteht und auf welche Art und Weise das Tragteil hergestellt wird, ist grundsätzlich beliebig. Um eine hohe Lebensdauer, angenehme Haptik sowie eine kostengünstige Herstellung zu realisieren, ist es besonders vorteilhaft, wenn das Tragteil in einem Gussverfahren hergestellt ist.

Eine Ausführungsform der erfindungsgemäßen Vorrichtung ist in den Zeichnungen schematisiert dargestellt und wird nachfolgend beispielhaft erläutert.

Es zeigen:
- **Fig. 1**: ein an einer Gefäßwandung angeordnetes Tragteil und einen Handgriff in Demontagelage im Längsschnitt;
- **Fig. 2**: das Tragteil und den Handgriff gemäß Fig. 1 in Ansicht von oben;
- **Fig. 3**: das Tragteil und den Handgriff in Gebrauchslage mit freigegebener Stirnrandkante der Basis des Tragteils im Längsschnitt;
- **Fig. 4**: das Tragteil und den Handgriff in Gebrauchslage mit der die Stirnrandkante der Basis des Tragteils untergreifenden Haltenase im Längsschnitt;

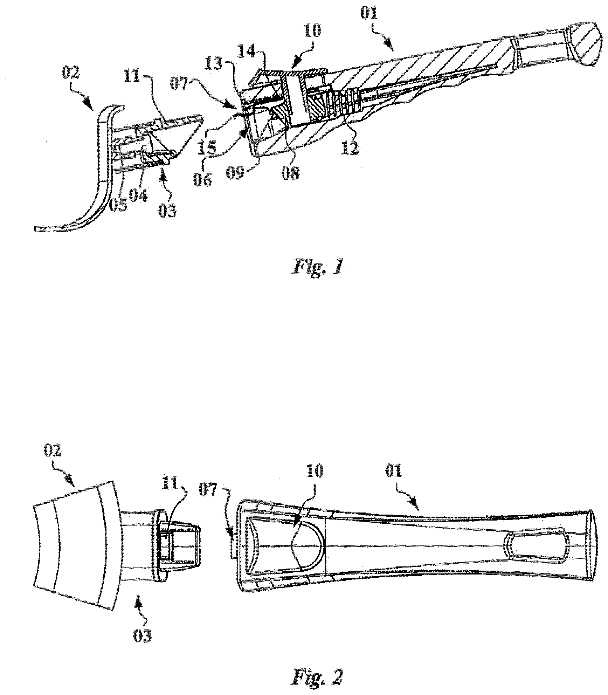

In der Ausführungsform gemäß den **Fig. 1** bis **Fig. 4** ist das Tragteil 03 mittels einer Schraube 04 an einem Butzen 05 befestigt, welcher an der Wandung des Kochgefäßes 02 angeordnet ist. In der Ausnehmung 06 des Handgriffs 01 ist ein Federelement 12 angeordnet und ein Gabelelement 07 klemmend befestigt. Das Betätigungselement 10 ist in der dargestellten Ausführungsform auf das eine Haltenase 09 aufweisende Rastelement 08 aufgesteckt. Das Gabelelement 07 weist einen geraden Abschnitt 14 und einen gebogenen Abschnitt 13 auf. Der gebogene Abschnitt 13 ist im Wesentlichen S-förmig gebogen, so dass ein Anlageballen 15 ausgebildet ist, der in Gebrauchslage am Tragteil 03 zur Anlage kommt. Das Tragteil 03 ist mit einer Einführschräge ausgebildet und weist in seiner Basis eine fensterartige Ausnehmung 11 auf, in die in Gebrauchslage der gebogene Abschnitt 13 des Gabelelements 07 eingeführt wird.

Die **Fig. 2** zeigt das Kochgefäß 02, das Tragteil 03 und den Handgriff 01 gemäß Fig. 1 in Ansicht von oben. In der Ansicht von oben ist die fensterartige Ausnehmung 11, in die das gebogene Ende 13 des Gabelelements 07 zur Realisierung der Gebrauchslage eingeführt wird, dargestellt. Ebenso ist das Betätigungselement 10, das am Handgriff 01 parallel zur Handgrifflängserstreckung verschiebbar ist, dargestellt.

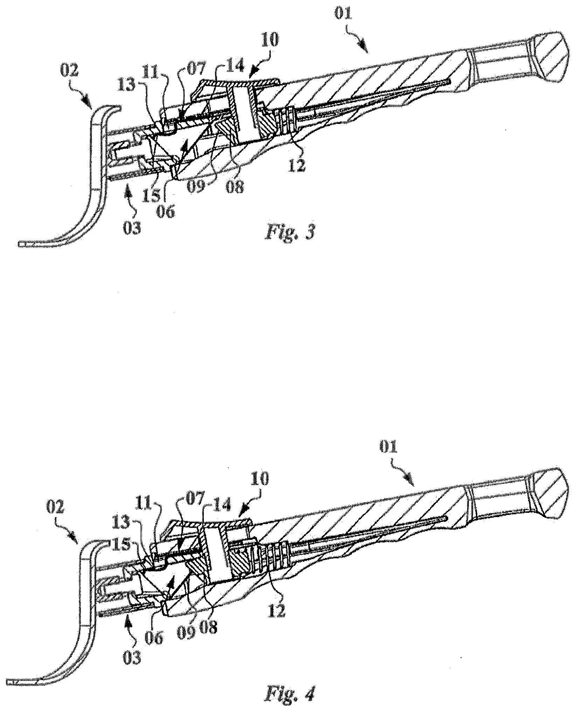

**Fig. 3** und **Fig. 4** zeigen das Kochgefäß mit dem auf das Tragteil 03 aufgesteckten Handgriff 01 im Längsschnitt. In der Ausnehmung 06 des Handgriffs 01 ist das Gabelelement 07 klemmend befestigt. Der Anlageballen 15 des im Wesentlichen S-förmig gebogenen Abschnitts 13 des Gabelelements 07 greift in die fensterartige Ausnehmung 11 der Basis des Tragteils 03 ein und kommt mit einer im Wesentlichen linearen Anlagefläche am Tragteil 03 zur Anlage. Der gerade Abschnitt 14 des Gabelelements 07 liegt auf einer von der Basis gebildeten Auflagefläche auf, welche sich von der fensterartigen Ausnehmung 11 parallel zur Oberseite der Basis in Richtung des Betätigungselements 10 erstreckt. Durch diese Anordnung des federelastischen Gabelelements 07 in der Gebrauchslage verspannt sich das Gabelelement 07 und sorgt für die notwendige Stabilität und einen wackelfreien Sitz. In dem vom Kochgefäß 02 entfernt gelegenen Bereich der Ausnehmung 06 im Handgriff 01 ist ein Federelement 12 angeordnet, gegen dessen Federkraft das Betätigungselement 10, welches steckbar mit dem Rastelement 08 verbunden ist, verschoben werden kann. In **Fig. 3** ist das Rastelement 08 so positioniert, dass die am Rastelement 08 angeordnete Haltenase 09 mit abgeschrägter Stirnfläche die Stirnrandkante der Basis des Tragteils 03 freigibt. In **Fig. 4** hingegen ist die Verbindung zwischen Tragteil 03 und Handgriff 01 gesichert, da die am Rastelement 08 angeordnete Haltenase 09 die Stirnrandkante der Basis des Tragteils 03 untergreift.

## Patentansprüche

1. Vorrichtung zur Befestigung eines Handgriffs (01) an einem Koch- oder Bratgefäß (02) mit einem von der Gefäßwandung nach außen überstehenden Tragteil (3) und dem an diesem lösbar steckbefestigbaren Handgriff (01), wobei der Handgriff (01) eine stirnseitige Ausnehmung (06) aufweist, mit der er auf das Tragteil (03) aufsteckbar ist, und wobei in der Ausnehmung (06) des Handgriffs (01) ein Federelement (12) gehaltert ist, und wobei das Federelement (12) bei auf das Tragteil (03) aufgestecktem Handgriff (01) auf ein mit dem Tragteil (03) rastend verbindbares Rastelement (08) des Handgriffs (01) einwirkt, und wobei am Handgriff (01) ein Betätigungselement (10) vorgesehen ist, und wobei mittels des Betätigungselements (10) das Federelement (12) betätigbar ist,
**dadurch gekennzeichnet,**
**dass** das Tragteil (03) in seiner Basis eine fensterartige Ausnehmung (11) aufweist und in der Ausnehmung (06) des Handgriffs (01) an der in Gebrauchslage parallel zur Basis gerichteten Fläche ein Gabelelement (07) klemmend befestigt ist, wobei das Gabelelement (07) aus federelastischem Material hergestellt ist und einen gebogenen Abschnitt (13) und einen geraden Abschnitt (14) aufweist, und wobei das Gabelelement (07) am gebogenen Abschnitt (13) im Wesentlichen S-förmig gebogen ist, und wobei ein Anlageballen (15) am gebogenen Abschnitt (13) ausgebildet ist, und wobei das Gabelelement (07) mit seinem gebogenen Abschnitt (13) in die fensterartige Ausnehmung (11) eingreift und sich das federelastisch vorgespannte Gabelelement (07) in der Gebrauchslage an einer Auflagefläche abstützt, und wobei das Gabelelement (07) in der Gebrauchslage einerseits mit dem geraden Abschnitt (14) und andererseits mit dem Anlageballen (15) am Tragteil (03) abgestützt ist.

2. Vorrichtung nach Anspruch 1,
**dadurch gekennzeichnet,**
**dass** das Tragteil (03) einen im Wesentlichen U-förmigen Querschnitt mit in Gebrauchslage etwa vertikal abkragenden Schenkeln und die Ausnehmung (06) des Handgriffs (01) eine entsprechende Querschnittsform aufweist, und wobei mindestens ein Schenkel des Tragteils (03) und/oder mindestens eine mit einem Schenkel des Tragteils (03) in der Gebrauchslage der Teile zusammenwirkende Fläche der Ausnehmung (06) des Handgriffs (01) derart schräg gestellt ist, dass der Schenkel oder die Schenkel des Tragteils (03) mit dessen Basis einen stumpfen Winkel einschließt oder einschließen und/oder die mit dem Schenkel korrespondierende Wandung der Ausnehmung (06) mit der Basis des Tragteils (03) in Gebrauchslage einen stumpfen Winkel einschließt.

3. Vorrichtung nach Anspruch 1 oder 2,
**dadurch gekennzeichnet,**
**dass** der Anlageballen (15) mit einer im Wesentlichen linearen Anlagefläche am Tragteil (03) zur Anlage kommt.

4. Vorrichtung nach Anspruch 1 bis 3,
**dadurch gekennzeichnet,**
**dass** die lineare Anlagefläche des Anlageballens (15) quer zur Längserstreckung des Gabelelements (07) gerichtet ist.

5. Vorrichtung nach Anspruch 1 bis 4,
**dadurch gekennzeichnet,**
**dass** der gerade Abschnitt (14) des Gabelelements (07) in der Gebrauchslage auf einer von der Basis gebildeten Auflagefläche aufliegt, wobei sich die Auflagefläche von der fensterartigen Ausnehmung (11) parallel zur Oberseite der Basis in Richtung des Betätigungselements (10) erstreckt.

6. Vorrichtung nach Anspruch 1 bis 5,
**dadurch gekennzeichnet,**
**dass** das Tragteil (03) und/oder die Ausnehmung des Handgriffs (01) im Querschnitt trapezförmig ist.

7. Vorrichtung nach Anspruch 1 bis 6,
**dadurch gekennzeichnet,**
**dass** die Schenkel des Tragteils (03) in Gebrauchslage im Wesentlichen ballig an den dazu parallelen Flächen der Ausnehmung (06) anliegen.

8. Vorrichtung nach Anspruch 1 bis 7,
**dadurch gekennzeichnet,**
**dass** das Betätigungselement (10) auf das Rastelement (08) steckbar verbunden ist.

9. Vorrichtung nach Anspruch 1 bis 8,
**dadurch gekennzeichnet,**
**dass** das Betätigungselement (10) am Handgriff (01) parallel zur Grifflängserstreckung gegen Federkraft des Federelements (12) verschiebbar gehaltert ist, wobei das Betätigungselement (10) das Rastelement (08) so positioniert, dass eine am Rastelement (08) angeordnete Haltenase (09) in Gebrauchslage die Stirnrandkante der Basis des Tragteils (03) untergreift, und in Demontagelage die Stirnrandkante der Basis des Tragteils (03) freigibt.

10. Vorrichtung nach Anspruch 9,
**dadurch gekennzeichnet,**
**dass** die Haltenase (09) des Rastelement (08) an der Stirnfläche abgeschrägt ist.

11. Vorrichtung nach Anspruch 1 bis 10,
**dadurch gekennzeichnet,**
**dass** als Federelement (12) eine Schraubenfeder angeordnet ist, wobei sich die Schraubenfeder einerseits an der Rückseite des Rastelements (08) und andererseits an einer dazu parallelen Fläche am Ende der Ausnehmung (06) des Handgriffs (01) abstützt.

12. Vorrichtung nach Anspruch 1 bis 11,
**dadurch gekennzeichnet,**
**dass** das Tragteil (03) in einem Gussverfahren hergestellt ist.

## Claims

1. A device for fastening a handle (01) to cookware or bakeware (02) having a support piece (03) protruding outward from the cookware or bakeware wall and the handle (01) which can be detachably snapped onto the support piece (03), the handle (01) having a frontal recess (06) by means of which it can be snapped onto the support piece (03), and a spring element (12) being retained in the recess (06) of the handle (01), the spring element (12) acting on a latching element (08) of the handle (01), which latches onto the support piece (03), when the handle (01) is snapped onto the support piece (03), and an actuation element (10) being provided on the handle (01), and the spring element (12) being able to be activated by means of the actuation element (10),
**characterized in that**
the support piece (03) has a window-like recess (11) in its base and a fork element (07) is clamped in the recess (06) of the handle at the surface parallel to the base in operating position, the fork element (07) being made of resilient material and having a bent section (13) and a straight section (14), the fork element (07) being curved essentially like an S at the curved section (13), and an attachment protrusion (15) being formed at the bent section (13), and the fork element (07) engaging into the window-like recess (11) with its curved section (13) , and the resilient fork element (07) being supported on a support surface in operating position, the fork element (07) is supported on the support piece (03) by the flat section (14) on the one hand or by the attachment protrusion (15) on the other hand in operating position.

2. The device according to claim 1,
**characterized in that**
the support piece (03) has an essentially U-shaped cross section having legs jutting out approximately vertical in operating position and the recess (06) of the handle (01) has a corresponding cross-sectional shape, at least one leg of the support piece (03) and/or at least one surface of the recess (06) of the handle (01) interacting with a leg of the support piece (03) when the parts are in use being set at an angle such that the leg or the legs of the support piece (03) encloses an obtuse angle with its base and/or the wall of the recess (06) corresponding to the leg encloses an obtuse angle with the base of the support piece (03) in operating position.

3. The device according to claims 1 to 2,
**characterized in that** the attachment protrusion (15) abuts against the support piece (03) with an essentially linear abutment surface.

4. The device according to claims 1 to 3,
**characterized in that**
the linear abutment surface of the attachment protrusion (15) is aligned perpendicular to the longitudinal extension of the fork element (07).

5. The device according to claims 1 to 4,
**characterized in that**
the flat section (14) of the fork element (07) in operating position rests on a rest surface formed by the base, the rest surface extending parallel to the upper side of the base from the window-like recess (11) toward the actuation element (10).

6. The device according to claims 1 to 5,
**characterized in that**
the support piece (03) and/or the recess of the handle (01) has a trapezoidal cross section.

7. The device according to claims 1 to 6,
**characterized in that**
the legs of the support piece (03) in operating position essentially articulate with the surfaces of the recess (06) which are parallel thereto.

8. The device according to claims 1 to 7,
**characterized in that**
the actuation element (10) is latched onto the latching element (08).

9. The device according to claims 1 to 8,
**characterized in that**
the actuation element (10) is retained on the handle (01) in a displaceable manner parallel to the longitudinal handle extension against the spring force of the spring element (12), the actuation element (10) positioning the latching element (08) such that a retaining flange (09) disposed on the latching element (08) engages under the front rim of the base of the support piece (03) in operating position and releases the front rim of the base of the support piece (03) when removed.

10. The device according to claim 9,
**characterized in that**
the retaining flange (09) of the latching element (08) is beveled at the front surface.

11. The device according to claims 1 to 10,
**characterized in that**
a helical spring is disposed as a spring element (12), the helical spring being supported on the backside of the latching element (08) on the one hand and at a surface parallel thereto at the end of the recess (06) of the handle (01) on the other hand.

12. The device according to claims 1 to 11,
**characterized in that**
the support piece (03) is produced by cast molding.

## Revendications

1. Dispositif pour la fixation d'une poignée (01) sur un récipient de cuisson ou de friture (02) ayant une pièce de support (03) saillis-sant de la paroi de le récipient de cuisson ou de friture vers l'extérieure et ayant la poignée (01) qui peut être cliquée sur la pièce de support (03) de manière détachable, la poignée (01) ayant un évidement (06) frontal au moyen duquel elle peut être cliquée sur la pièce de support (03), et un élément de ressort (12) étant maintenu dans l'évidement (06) de la poignée (01), et l'élément de ressort (12) agissant sur un élément de verrouillage (08) de la poignée (01), qui peut être relié de manière verrouillée avec la pièce de support (03), quand la poignée (01) est cliquée sur la pièce de support (03), un et élément d'actionnement (10) étant prévu sur la poignée (01), et l'élément de ressort (12) pouvant être actionné au moyen de l'élément d'actionnement (10),
**caractérisé en ce que**
la pièce de support (03) a un évidement (11) comme une fenêtre dans sa base et un élément de fourchette (07) est serré dans l'évidement (06) de la poignée (01) à la surface parallèle à la base dans la position d'utilisation, l'élément de fourchette (07) étant fait en matériau résilient et ayant une partie courbée (13) et une partie plate (14), et l'élément de fourchette (07) étant courbé essentiellement en forme de S à la partie courbée (13), et une protrusion d'attachement (15) étant formée à la parte courbée (13), et l'élément de fourchette (07) s'engageant dans le évidement (11) comme une fenêtre par sa partie courbée (13), et l'élément de fourchette (07) résilient s'appuyant sur une surface de support dans la position d'utilisation, et l'élément de fourchette (07) étant appuyé sur la pièce de support (03) par la partie plane (14) d'un côté ou par la protrusion d'attachement (15) de l'autre dans la position d'utilisation.

2. Dispositif selon la revendication 1,
**caractérisé en ce que**
la pièce de support (03) a une section transversale essentiellement en forme d'U et ayant de jambes faisant saillie environ verticalement dans la position d'utilisation et l'évidement (06) de la poignée (01) a une forme transversale correspondante, et au moins une jambe de la pièce de support (03) et/ou au moins une surface de l'évidement (06) de la poignée (01) interagissant avec une jambe de la pièce de support (03) dans la position d'utilisation étant biaisées de telle manière que la jambe ou les jambes de la pièce de support (03) encerclent un angle obtus avec sa base et/ou la paroi de l'évidement (06) correspondant à la jambe encercle un angle obtus avec sa base de la pièce de support (03) dans la position d'utilisation.

3. Dispositif selon la revendications 1 à 2,
**caractérisé en ce que**
la protrusion d'attachement (15) s'appuie contre la pièce de support (03) avec une surface d'appui essentiellement linéaire.

4. Dispositif selon la revendications 1 à 3,
**caractérisé en ce que**
la surface d'appui linéaire de la protrusion d'attachement (15) est orientée perpendiculairement à la longueur de l'élément de fourchette (07).

5. Dispositif selon la revendications 1 à 4,
**caractérisé en ce que**
la partie plane (14) de l'élément de fourchette (07) dans la position d'utilisation reste sur une surface d'appui formée par la base, la surface d'appui s'étendant parallèlement au côté supérieur de la base à partir de l'évidement (11) comme une fenêtre vers l'élément d'actionnement (10).

6. Dispositif selon la revendications 1 à 5,
**caractérisé en ce que**
la pièce de support (03) et/ou l'évidement de la poignée (01) a une section transversale trapézoïdale.

7. Dispositif selon la revendications 1 à 6,
**caractérisé en ce que**
les jambes de la pièce de support (03) dans la position d'utilisation articule essentiellement avec les surfaces de l'évidement (06) qui sont parallèles auxquelles.

8. Dispositif selon la revendications 1 à 7,
**caractérisé en ce que**
l'élément d'actionnement (10) est verrouillé sur l'élément de verrouillage (08).

9. Dispositif selon la revendications 1 à 8,
**caractérisé en ce que**
l'élément d'actionnement (10) est maintenu sur la poignée (01) dans une manière déplaçable parallèle à la longueur de la poignée contre une force de ressort de l'élément de ressort (12), l'élément d'actionnement (10) mettant l'élément de verrouillage (08) en position de telle manière qu'une bride de retenue (09) disposée sur l'élément de verrouillage (08) s'engage au-dessous le bord frontal de la base de la pièce de support (03) dans la position d'utilisation et déclenche le bord frontal de la base de la pièce de support (03) dans la position de démontage.

10. Dispositif selon la revendication 9,
**caractérisé en ce que**
la bride de retenue (09) de l'élément de verrouillage (08) est en biseau à la surface frontale.

11. Dispositif selon la revendications 1 à 10,
**caractérisé en ce**
**qu'**un ressort hélicoïdal est disposé comme élément de ressort (12), le ressort hélicoïdal s'appuyant sur le revers de l'élément de verrouillage (08) d'un côté et sur une surface parallèle auquel à l'extrémité de l'évidement (06) de la poignée (01) de l'autre.

12. Dispositif selon la revendications 1 to 11,
**caractérisé en ce que**
la pièce de support (03) est produite par un procédé de coulage.
